Europäisches Patentamt

European Patent Office

Office européen des brevets

(19)

(11) Numéro de publication : **0 121 530 B1**

# FASCICULE DE BREVET EUROPÉEN

(12)

(45) Date de publication du fascicule du brevet :
16.04.86

(21) Numéro de dépôt : 83903091.3

(22) Date de dépôt : 04.10.83

(86) Numéro de dépôt international :
PCT/FR 83/00200

(87) Numéro de publication internationale :
WO/8401368 (12.04.84 Gazette 84/10)

(51) Int. Cl.⁴ : **C 04 B 35/54**, F 27 B 9/28,
H 05 B 3/60

(54) **PROCEDE ET FOUR DE GRAPHITISATION.**

(30) Priorité : 06.10.82 FR 8217020

(43) Date de publication de la demande :
17.10.84 Bulletin 84/42

(45) Mention de la délivrance du brevet :
16.04.86 Bulletin 86/16

(84) Etats contractants désignés :
AT BE CH DE GB LI LU NL SE

(56) Documents cités :
DE-A- 2 162 246
DE-A- 2 311 467
DE-A- 2 316 494
FR-A- 2 272 031
FR-A- 2 293 399
US-A- 2 621 218

(73) Titulaire : **SOCIETE DES ELECTRODES ET REFRAC-
TAIRES "SAVOIE" (SERS)
Tour Manhattan 6 place de l'Iris
F-92400 Courbevoie (FR)**

(72) Inventeur : **BERNARD, Jean-Claude
3, rue des Genêts
F-69110 Sainte-Foy-Les-Lyon (FR)**
Inventeur : **CHABRIER, Patrick
18B Juan Canalejo
La Corogne (ES)**
Inventeur : **TAHON, Bernard
36 Impasse de la Terrasse-Passy
F-74190 Le Fayet (FR)**
Inventeur : **TESORIERE, Jean-Marc
58 Impasse de la Roseraie-Passy
F-74190 Le Fayet (FR)**
Inventeur : **ORTEGA, Domingo
SERS 12, rue du Général Foy
F-75008 Paris (FR)**

(74) Mandataire : **Pascaud, Claude et al
PECHINEY 28, rue de Bonnel
F-69433 Lyon Cedex 3 (FR)**

Jouve, 18, rue St-Denis, 75001 Paris, France

## 0 121 530

**Description**

Le procédé, qui fait l'objet de l'invention, concerne la graphitisation de produits carbonés longs, afin d'obtenir des électrodes, des barres allongées, des tubes de section circulaire ou autre, ou tous autres produits longs en graphite.

L'invention concerne aussi un four pour la mise en œuvre du procédé suivant l'invention.

D'assez nombreux procédés ont été proposés pour réaliser la graphitisation en continu de matières carbonées sous forme de pièces massives ou sous forme granulaire. Ces procédés n'ont généralement pas donné des résultats satisfaisants à cause de la difficulté qu'il y a à trouver des matériaux réfractaires à travers lesquels des produits carbonés, portés à près de 3 000 ºC puissent se déplacer et aussi à cause des difficultés qu'il y a à chauffer jusqu'à 3 000 ºC ces produits.

Dans le brevet DE-C 2 311 467, on décrit un procédé qui permet de graphitiser en continu des produits carbonés cylindriques qu'on fait circuler verticalement à l'intérieur d'un four.

Les figures ci-après permettront de mieux comprendre les caractéristiques de ce procédé connu et celles du procédé et du four qui font l'objet de l'invention :

Figure 1   vue en élévation et en coupe d'un four continu de graphitisation à axe vertical de type connu.

Figure 2   vue schématique en élévation d'un four continu de graphitisation suivant l'invention.

Figure 3   vue en coupe agrandie suivant A-A du four de la figure 2.

Figure 4   vue en coupe agrandie suivant B-B du four de la figure 2.

Figure 5   vue en coupe agrandie suivant C-C du four de la figure 2.

Figure 6   vue en élévation et en coupe agrandie, suivant l'axe de défilement, de la zone d'entrée du four de la figure 2.

Figure 7   vue en coupe suivant D-D de la zone d'entrée représentée figure 6.

Figure 8   vue en élévation et en coupe, suivant l'axe de défilement, de la zone de sortie du four de la figure 2.

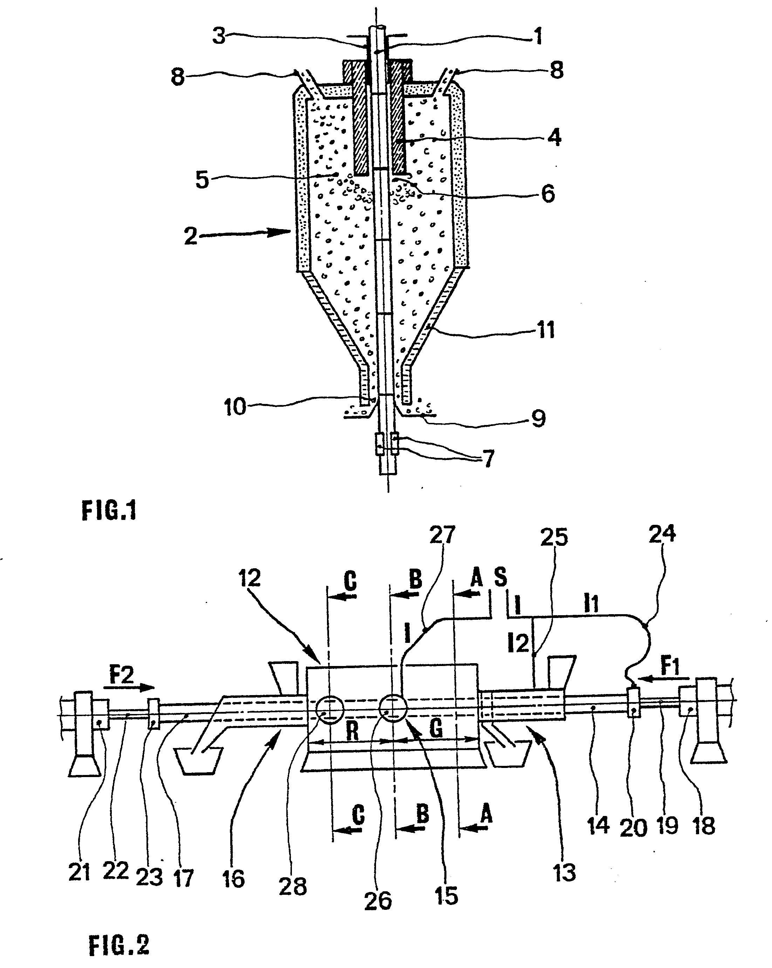

Dans le procédé suivant DE-C 2 311 467, comme le montre la figure 1, les produits carbonés à graphitiser (1) qui, dans le cas de la figure, sont des barres de section circulaire disposées verticalement bout à bout, pénètrent dans le four (2) à travers un orifice d'entrée constitué par un tube de guidage (3) et un manchon annulaire en graphite (4), lequel est relié à l'un des pôles d'une source de courant électrique. Ce manchon a un diamètre intérieur tel qu'il existe un jeu radial important entre la colonne de produits carbonés et lui. Le passage du courant électrique entre le manchon et les produits carbonés n'a pas lieu de façon directe, mais par l'intermédiaire des grains de coke (5) qui remplissent l'intérieur du four (2) et sont en contact, d'une part, avec la paroi extérieure du manchon (4) et, d'autre part, avec la colonne de produits carbonés (1), dans une zone qui débute au-dessous de ce manchon, là où le talus d'éboulement du coke, qui laisse un espace libre en forme d'entonnoir (6) au-dessous du manchon, entre en contact avec la colonne de produits carbonés. Il y a donc échauffement progressif de cette colonne à la fois par rayonnement et par conduction thermique des grains de coke, portés à haute température par le courant électrique qui les traverse, et aussi par chauffage direct par le courant électrique qui s'écoule à travers la colonne au-dessous de l'espace libre (6) en forme d'entonnoir.

En même temps que la colonne de produits carbonés descend dans le four, la couche de granulés de coke, qui est au voisinage de cette colonne, l'accompagne. On introduit donc en permanence du granulé de coke à la partie supérieure du four en (8) pour remplacer celui qui est extrait à la partie inférieure, au moyen du râcleur (10) et du plateau de déchargement (9). En aval de ce plateau, des pièces de contact (7) assurent la liaison à l'extérieur du four entre la colonne de produits carbonés et l'autre pôle de la source de courant électrique.

Le contact électrique entre les tronçons cylindriques des produits carbonés, à chacune de leurs extrémités, est assuré par une pâte graphitisée qui durcit au cours de la montée en température.

Un tel four présente l'inconvénient de nécessiter une double circulation de produits : d'une part, la colonne de produits carbonés et, d'autre part, le granulé de coke de remplissage. La circulation de ce granulé de coke est nécessaire car, s'il ne circulait pas, il s'échaufferait de façon excessive dans la zone supérieure du four où il est traversé par la totalité du courant électrique issu du manchon (4) ; de plus, tout au long de la colonne de produits carbonés, ce granulé est entraîné vers le bas à la fois par la pesanteur et par le frottement. Il importe donc d'extraire, à la base du four, de façon aussi régulière que possible, des granulés maintenus à une température extrêmement haute par le contact avec la colonne d'électrodes malgré la proximité des parois refroidies par eau (11) du four (1). De même, la colonne d'électrodes sort du four à une température extrêmement élevée du fait qu'elle est parcourue par la totalité du courant électrique jusqu'aux pièces de contact (7).

On a donc recherché la possibilité de réaliser un four de graphitisation permettant, en particulier, de graphitiser des produits longs carbonés précuits, de section circulaire ou autre, dont le calorifugeage serait constitué par une matière carbonée divisée qui ne serait pas entraînée de façon systématique par le passage des produits carbonés à travers le four et qui resterait donc maintenue dans un état pratiquement statique à l'intérieur du four.

On a recherché aussi la possibilité d'assurer une liaison électrique entre le produit carboné entrant

2

dans le four et la source de courant, par passage direct du courant à travers l'espace compris entre une pièce d'amenée de courant annulaire reliée à la source de courant et la colonne de produits carbonés, une matière de contact remplissant au moins en partie l'espace compris entre cette pièce annulaire et la colonne de produits carbonés.

On a recherché, enfin, la possibilité d'assurer une montée en température progressive des produits carbonés constituant la colonne qui sont introduits dans le four depuis la température ambiante jusqu'à la température de graphitisation, ces mêmes produits, après graphitisation, subissant un refroidissement progressif avant de sortir du four.

Le procédé continu de graphitisation de produits carbonés longs précuits suivant l'invention consiste à déplacer suivant un axe de défilement sensiblement horizontal, ces produits carbonés longs précuits, de section circulaire ou autre en colonne, dans un four dont le garnissage est constitué par une matière carbonée divisée qui est en contact avec ladite colonne de produits carbonés mais ne l'accompagne pas dans ses déplacements, le chauffage de cette colonne de produits étant assuré par effet Joule. Au moins un contact électrique est réalisé à l'entrée du four entre la colonne de produits et l'un des pôles d'une source de courant, le deuxième pôle de la source de courant étant mis en contact avec la colonne de produits à l'extrémité aval de la zone de graphitisation à l'intérieur du four.

Afin d'assurer un bon contact électrique entre les extrémités des produits carbonés longs, qui constituent la colonne et, afin aussi de donner à celle-ci une certaine rigidité, on met sous contrainte de compression l'ensemble de la colonne en exerçant sur ses deux extrémités, grâce à des moyens de pression tels que des vérins, des forces parallèles à l'axe de défilement et dirigées l'une contre l'autre, dont l'intensité est comprise entre environ 0,1 et 1 MPa.

Il est avantageux, dans le procédé suivant l'invention, d'effectuer un préchauffage des produits avant pénétration dans la zone d'entrée du four. Pour cela, on introduit dans la colonne de produits, à son extrémité amont, au voisinage immédiat du moyen de pression, un courant électrique dont l'intensité est comprise entre 10 et 50 % de l'intensité du courant qui parcourt la colonne à l'intérieur du four. La fraction complémentaire du courant est introduite dans la colonne plus en aval, juste dans la zone d'entrée du four, dans une zone où la température de la colonne est déjà supérieure à environ 500 °C.

Dans le cas où on utilise une seule source de courant d'alimentation, l'un des pôles de celle-ci est relié en parallèle à la colonne de produits, à son extrémité amont, et plus en aval dans la zone d'entrée du four, tandis que l'autre pôle de cette source de courant est relié à la colonne, à l'intérieur même du four.

Il est possible également d'utiliser deux sources de courant indépendantes. La première est une source de courant de préchauffage comportant un premier pôle relié à l'extrémité amont de la colonne de produits et un deuxième pôle relié à la colonne de produits dans la zone d'entrée du four. La deuxième est la source de graphitisation proprement dite, dont le premier pôle est relié, comme le deuxième pôle de la source de courant de préchauffage, à la colonne de produits dans la zone d'entrée du four, le deuxième pôle étant relié à cette même colonne à l'intérieur du four, à l'extrémité aval de la zone de graphitisation. On peut utiliser, suivant les disponibilités, du courant alternatif ou du courant continu.

La mise en contact électrique de la colonne avec le deuxième pôle de la source de courant de graphitisation est effectuée avantageusement, suivant l'invention, à l'extrémité aval de la zone de graphitisation, au moyen d'au moins un conducteur électrique de liaison qui pénètre à l'intérieur du four, dont l'axe est sensiblement transversal par rapport à l'axe de défilement de la colonne de produits, dont au moins une extrémité éloignée de la colonne de produits carbonés est reliée, à l'extérieur du four, au deuxième pôle de la source de courant, une autre extrémité ou une autre partie de ce conducteur électrique de liaison étant en contact direct ou indirect avec la colonne de produits carbonés à l'intérieur du four. Le contact entre la colonne de produits carbonés en déplacement et le conducteur électrique de liaison est, de préférence, assuré par une couche de matériau carboné divisé, telle que des grains de graphite, qui remplit l'espace entre ce conducteur électrique de liaison, la paroi latérale de la colonne de produits carbonés et la partie la plus proche de ce conducteur électrique de liaison. Cet espace a une largeur de l'ordre de 1 à 10 cm.

Pour améliorer la répartition du courant, il est avantageux d'utiliser deux conducteurs électriques de liaison, ou davantage, reliés en parallèle au deuxième pôle de la source de courant, convenablement répartis autour de l'axe de défilement de la colonne de produits carbonés. On peut utiliser au moins un conducteur électrique de liaison qui traverse le four dans toute sa largeur. Les deux extrémités de ce conducteur sont alors reliées à la source de courant, tandis qu'il se trouve dans sa partie médiane en contact direct ou indirect avec la colonne de produits.

De préférence, on réalise un refroidissement progressif de la colonne de produits carbonés en disposant à l'intérieur du four, en aval de la zone de graphitisation, au sein de la matière carbonée divisée, au moins un conducteur thermique de liaison qui pénètre à l'intérieur du four, dont l'axe est sensiblement transversal par rapport à l'axe de la colonne de produits, dont au moins une extrémité, éloignée de la colonne de produits carbonés, se trouve de préférence à l'extérieur du four et est refroidie par un moyen de refroidissement, une autre extrémité ou une autre partie de ce conducteur thermique de liaison étant en contact direct ou indirect avec la colonne de produits carbonés à l'intérieur du four. Ce conducteur thermique de liaison est, de préférence, en graphite en ce qui concerne au moins la partie de celui-ci, qui est logée à l'intérieur du four dans la zone à très haute température. De préférence, on dispose plusieurs conducteurs thermiques de liaison répartis de façon convenable autour de l'axe de défilement de la

3

colonne de produits et, de préférence également, on répartit ces conducteurs le long de l'axe de défilement de la colonne de produits en aval de la zone de graphitisation jusqu'au voisinage immédiat de l'extrémité du four par laquelle la colonne de produits sort du four. On peut utiliser au moins un conducteur thermique de liaison qui traverse le four dans toute sa largeur. Les deux extrémités de ce conducteur sont alors à l'extérieur du four et c'est sa partie médiane qui se trouve en contact direct ou indirect avec la colonne de produits.

Suivant l'invention, le défilement de la colonne de produits carbonés est réalisé en exerçant sur cette colonne une pression supérieure du côté de l'amont à la pression exercée du côté de l'aval, et en ajustant cette pression de façon à obtenir un déplacement régulier de la colonne de produits de l'amont vers l'aval, tout en maintenant la colonne sous contrainte pendant son déplacement. Ce déplacement peut s'effectuer à vitesse constante ou variable, ou encore pas à pas.

Toujours suivant l'invention, on interrompt ce déplacement chaque fois que la colonne de produits s'est déplacée d'une longueur égale à la longueur unitaire d'un produit ou à un multiple de cette longueur. On extrait, alors, un ou plusieurs produits graphitisés à l'extrémité aval de la colonne et on met en place un ou plusieurs produits carbonés à graphitiser à l'extrémité amont. On peut, ensuite, à nouveau remettre en route le défilement de la colonne de produits à l'intérieur du four à la vitesse de déplacement voulue après avoir remis la colonne en pression.

On peut aussi, suivant l'invention, effectuer la mise en place des produits à graphitiser et aussi l'extraction des produits graphitisés sans interrompre l'avance de la colonne de produits et sans cesser de maintenir la colonne sous contrainte de compression. Un tel résultat est obtenu en utilisant, à chaque extrémité de la colonne, des pinces de serrage et d'amenée de courant qui permettent de réaliser sur la colonne une prise latérale pendant la mise en place en amont d'un nouveau tronçon à graphitiser ou l'enlèvement en aval d'un tronçon déjà graphitisé. Ces pinces maintiennent la colonne en mouvement à la vitesse de déplacement voulue.

L'invention concerne aussi un four continu de graphitisation de produits longs carbonés, qui comprend une enceinte allongée dans le sens horizontal pourvue, à l'une de ses extrémités, d'une zone d'entrée par laquelle pénètre une colonne de produits longs carbonés à graphitiser et, à l'autre extrémité, d'une zone de sortie par laquelle sort la colonne de produits longs carbonés après graphitisation. L'enceinte contient un calorifuge constitué par une matière carbonée divisée en contact, avec la colonne de produits. Un moyen de contact électrique, comportant une pièce annulaire, à travers laquelle passe la colonne de produits à graphitiser, placée dans la zone d'entrée et reliée à l'un des pôles de la source de courant, permet d'introduire au moins 50 % du courant dans la colonne de produits à graphitiser. Un autre moyen de contact électrique, comportant au moins un conducteur électrique placé à l'intérieur du four, assure la liaison électrique entre la colonne de produits graphitisés et l'autre pôle de la source de courant électrique. De façon préférentielle, au moins un moyen de contact thermique, comportant au moins un conducteur thermique, placé à l'intérieur du four en aval du moyen de contact électrique, assure une liaison thermique entre la colonne de produits graphitisés et un fluide qui se trouve à une température proche de l'ambiante. L'intensité du courant électrique qui traverse la colonne de produits est ajustée de façon que la température de cette colonne dans la zone la plus chaude dépasse 2 500 °C et atteigne, de préférence, 3 000 ± 200 °C.

Afin de mieux comprendre l'invention, on décrit ci-après, de façon détaillée mais non limitative, un mode avantageux de mise en œuvre de celle-ci.

La figure 2 représente, de façon schématique, un four (12) de forme allongée, qui comporte, de l'amont à l'aval, une zone d'entrée (13) dans laquelle pénètre la colonne de produits carbonés longs (14) qui subit dans cette zone un préchauffage, la partie principale (15), ou corps du four, dans laquelle la colonne de produits carbonés (14) est portée jusqu'à la température nécessaire de graphitisation, puis refroidie de façon progressive et, enfin, une zone de sortie (16) dans laquelle la colonne de produits, maintenant à l'état graphitisé, est refroidie encore davantage jusqu'à la température voulue pour pouvoir être exposée à l'air en (17) sans inconvénient.

Du côté amont, un vérin (18), pourvu d'un piston (19), exerce une force de poussée sur la colonne de produits (14) dans le sens de la flèche $F_1$, par l'intermédiaire d'une pièce d'appui et de contact électrique (20) refroidie par circulation interne d'un fluide tel que de l'eau.

Du côté aval, un vérin (21) exerce, par l'intermédiaire de son piston (22) qui agit sur la pièce d'appui (23), une force de retenue dans le sens de la flèche $F_2$ sur la colonne de produits dans la zone (17). En cours de fonctionnement, on règle les forces de poussée et de retenue de façon que la colonne de produits se déplace de l'amont vers l'aval, c'est-à-dire de droite à gauche dans le cas de la figure 2, à la vitesse voulue, tout en se trouvant maintenue en compression avec une force d'environ 0,1 à 1 MPa. Une source de courant S, qui peut être du courant alternatif ou continu, permet de faire passer à travers la colonne de produits à graphitiser un courant électrique I d'intensité suffisante pour que les produits carbonés constituant la colonne soient portés à la température de graphitisation à l'intérieur du four.

Du côté amont, l'expérience a montré qu'il est préférable de relier la colonne de produits carbonés à la source de courant électrique en deux points : une fraction $I_1$ du courant I, en général comprise entre 10 et 50 % de I est introduite en tête de la colonne de produits carbonés au moyen de la pièce d'appui (20) qui est reliée à l'un des pôles de la source de courant électrique par le conducteur (24). La fraction complémentaire $I_2$ est introduite, comme le montre la figure 2, au niveau de la zone d'entrée (13) du four

4

par le conducteur (25) qui est donc monté en parallèle avec (24). La colonne de produits carbonés est reliée à l'autre pôle de la source de courant S par l'intermédiaire du moyen de contact électrique (26) et du conducteur (27).

L'emplacement du moyen de contact électrique (26) dans le corps du four (15) délimite, du côté de l'amont, la longueur de la zone de graphitisation G dans laquelle la colonne de produits carbonés est portée à la température voulue pour se transformer en graphite. En aval du moyen de contact électrique (26), s'étend sur le reste de la longueur du corps du four, une zone de refroidissement R dans laquelle la température de la colonne de produits carbonés graphitisés s'abaisse bien au-dessous du domaine de température de graphitisation.

Pour limiter les pertes thermiques de la colonne de produits carbonés pendant son passage dans le corps du four, on utilise comme calorifuge une matière carbonée divisée sous forme de grains ou de poudre. Cette matière occupe au moins tout l'espace qui entoure directement la colonne d'électrodes et vient jusqu'au contact de celle-ci. Dans les parties du corps du four qui se trouvent à des températures moins hautes et, en particulier, dans celles dont la température ne dépasse pas notablement 2 000 °C, on peut utiliser, à la place de ces granulés à base de carbone, des réfractaires à base d'oxydes métalliques sous forme de briques ou de bétons réfractaires.

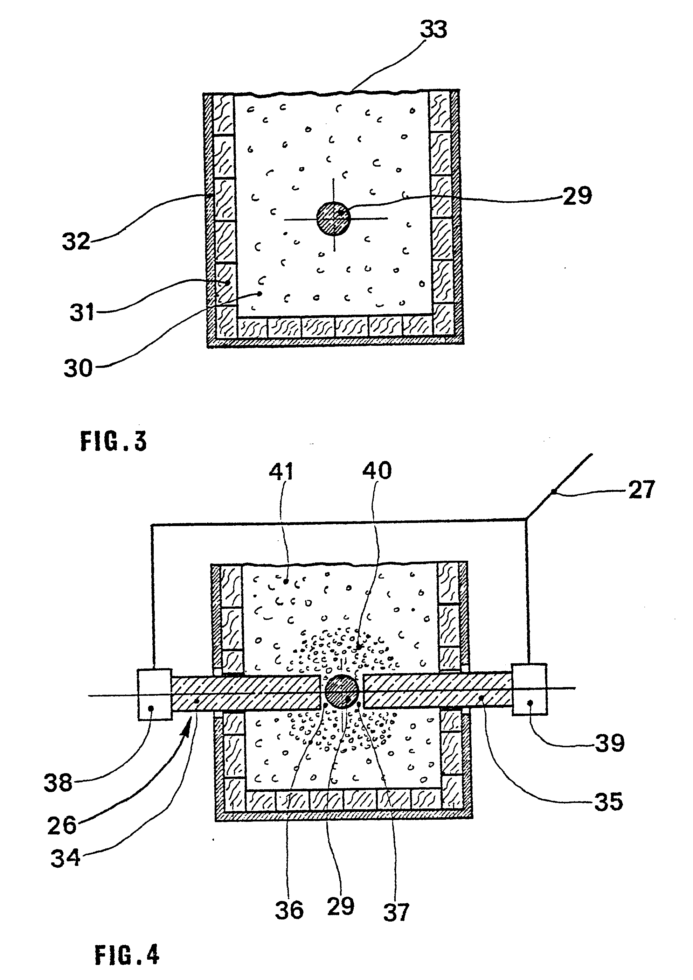

Dans la zone G (fig. 3), on utilise avantageusement comme isolant thermique (30), au voisinage immédiat de la colonne de produits carbonés, une matière carbonée en grains ou encore une poudre de noir de carbone (carton black). On peut aussi utiliser ces deux matériaux en couches alternées. L'expérience a montré que, dans les conditions normales d'exploitation, le défilement de la colonne de produits carbonés, à l'intérieur du four, ne provoque pas d'entraînement de la matière carbonée divisée vers la zone de sortie du four.

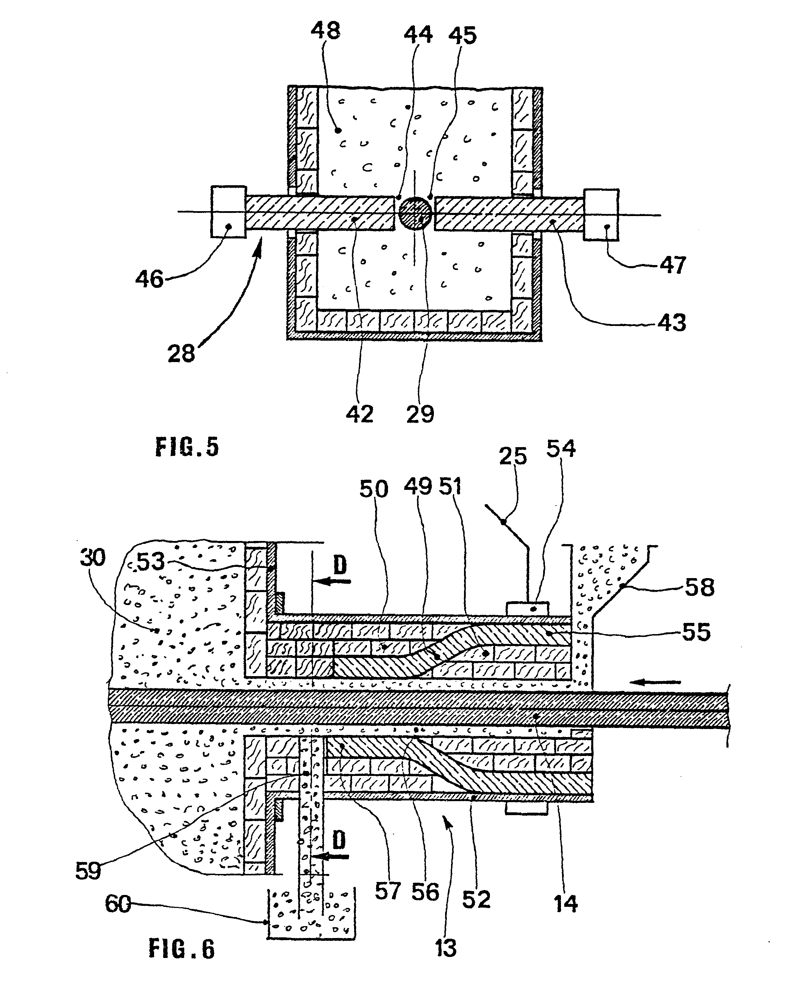

Afin de permettre le refroidissement de la colonne de produits carbonés dans la zone R, on utilise de préférence, dans cette zone, comme calorifuge, une matière carbonée divisée (48) (voir fig. 5) ayant une conductivité thermique plus élevée que celle qu'on utilise dans la zone G. On peut utiliser, par exemple, des grains de coke ou des grains de graphite, ou un mélange de ces grains.

Afin d'éviter de donner à la zone R une longueur exagérée, on peut accroître les pertes thermiques dans cette zone en plaçant, au sein de la matière carbonée divisée, au moins un conducteur thermique constitué par une ou plusieurs barres allongées, de relativement forte section, en matériau bon conducteur de la chaleur, orientées dans une direction de préférence transversale par rapport à l'axe de la colonne de produits carbonés. Ces barres sont disposées de façon que au moins l'une de leurs extrémités se trouve au voisinage de la paroi extérieure du four, de façon à pouvoir être refroidie facilement par un moyen convenable. L'autre extrémité de ces barres, ou une partie courante de celles-ci se trouve au voisinage immédiat de la colonne de produits. On utilise, de préférence, pour réaliser ces conducteurs thermiques, des barres de graphite de section suffisante. On voit figure 2 l'extrémité (28) d'un tel conducteur thermique. Le nombre et la section de ces conducteurs thermiques sont déterminés pour permettre d'obtenir la vitesse de refroidissement souhaitée de la colonne de produits graphitisés en tenant compte de sa section et de sa vitesse de défilement ainsi que de la longueur de la zone R. La vitesse de refroidissement de la colonne de produits graphitisés doit être d'autant plus faible que sa section est plus forte.

Les figures 3, 4 et 5 représentent de façon plus détaillée, en coupe, transversale agrandie suivant les plans de coupe A-A, B-B et C-C, la structure intérieure du corps du four.

La figure 3, qui est une coupe agrandie suivant A-A de la figure 2, montre la structure interne du four dans une partie courante de la zone de graphitisation G. La colonne de produits en cours de graphitisation (29) est entièrement entourée par une matière carbonée divisée (30), de faible conductivité thermique, de grosseur de grains de l'ordre de 0,2 à 10 mm. Ce granulé est lui-même logé à l'intérieur d'un garnissage de briques réfractaires (31) entouré d'une enveloppe en tôle (32). Dans certaines zones, il peut être utile de refroidir l'enveloppe métallique de façon connue pour éviter des surchauffes locales pouvant causer des déformations. A la partie supérieure (33), la matière carbonée divisée est en contact avec l'air ambiant.

La figure 4 est une coupe agrandie suivant B-B de la figure 2 au droit du moyen de contact électrique (26). On voit que ce moyen de contact électrique est constitué de deux barres en graphite (34-35) de section par exemple circulaire, disposées transversalement par rapport à l'axe de la colonne de produits carbonés graphitisés (29). L'une des extrémités de chacune de ces barres en graphite se trouve au voisinage immédiat de la colonne de produits, un intervalle de quelques centimètres (36-37) étant de préférence ménagé pour éviter tout risque d'accrochage. L'autre extrémité de chacune de ces barres se trouve à l'extérieur du four et est enserrée dans une pièce de contact électrique (38-39) refroidie par circulation de fluide de façon connue et non décrite. Ces deux pièces de contact électrique sont reliées par le conducteur électrique (27) au deuxième pôle de la source de courant S (voir figure 2).

Afin de faciliter le passage du courant électrique entre la colonne de produits carbonés graphitisés (29) et les barres de graphite (34-35), on dispose de préférence dans l'intervalle (36-37) et dans l'espace environnant, une couche de matière carbonée divisée de haute conductivité (40) constituée par des grains de graphite. Cette couche est, de préférence, entourée par une matière carbonée divisée (41) de conductivité plus faible telle que du granulé de coke pour réduire les pertes thermiques.

Afin d'améliorer encore la qualité du contact électrique entre la colonne de produits carbonés graphitisés et les barres de graphite transversales, on peut réaliser un contact direct entre la colonne en déplacement et ces barres. On peut, par exemple, faire glisser la colonne de produits carbonés graphitisés sur une ou plusieurs barres de contact disposées au-dessous de la colonne et comportant éventuellement des encoches en arc de cercle sur lesquelles la colonne prend appui. On peut utiliser éventuellement aussi une barre de contact qui traverse toute la largeur du four et sur le milieu de laquelle la colonne de produits carbonés graphitisés se trouve en contact glissant.

La figure 5 est une coupe agrandie suivant C-C de la figure 2 au droit du conducteur thermique de liaison (28). Ce conducteur thermique est constitué de deux barres en graphite (42-43) de section par exemple circulaire, disposées transversalement par rapport à l'axe de la colonne de produits carbonés graphitisés (29). Chacune de ces barres de graphite comporte une zone (l'une de ses extrémités dans le cas de la figure), qui se trouve au voisinage immédiat de la colonne de produits (29), un intervalle de quelques centimètres (44-45) étant de préférence ménagé pour éviter tout risque d'accrochage. L'autre extrémité de chacune de ces barres est à l'extérieur du four et est refroidie par une pièce de contact thermique (46-47) pourvue d'un moyen de refroidissement par circulation de fluide non représenté. La colonne de produits (29) et les barres de graphite sont entourées d'une matière carbonée divisée (48) telle qu'un granulé de coke ou tout autre matière carbonée divisée. On peut, si cela s'avère utile, améliorer le contact thermique entre la colonne de produits et les barres de graphite en disposant dans les intervalles (44-45) et dans l'espace environnant, une matière carbonée divisée de haute conductivité thermique telle qu'un granulé à base de graphite. Le contact thermique entre la colonne de produits graphités (29) et les barres de graphite peut encore être amélioré en réalisant un contact glissant d'une façon analogue à celui qui peut être réalisé au niveau des barres de contact électrique.

Afin d'accélérer la chute de température dans la zone R, il est souvent avantageux de disposer plusieurs conducteurs thermiques de liaison le long de l'axe de défilement de la colonne de produits, à des intervalles déterminés de façon à obtenir la courbe voulue de descente de température des produits graphités, compte tenu de leur vitesse de défilement et de leur section. Dans le cas, par exemple, d'une colonne de produits d'environ 500 ± 50 mm de diamètre, on ajuste les différents paramètres de façon à obtenir une vitesse de refroidissement d'environ 4 à 10 °C/min. Dans le cas d'une colonne de produits d'environ 600 ± 50 mm, il est préférable de réduire la vitesse maximale de refroidissement de façon à ne pas dépasser 7 °C/min. Des précautions particulières doivent être prises dans les zones d'entrée et de sortie du four pour, d'une part, éviter la pénétration d'air à l'intérieur du corps du four et, d'autre part, éviter l'oxydation superficielle de la colonne de produits carbonés. On doit, de plus, assurer dans la zone d'entrée de la colonne de produits carbonés un contact électrique satisfaisant avec l'un des pôles de la source de courant et on doit, dans la zone de sortie, éviter les entraînements de matière carbonée divisée provenant du corps du four.

La figure 6 est une coupe axiale agrandie de la zone d'entrée (13) du four (12) de la figure 2. On voit que la colonne de produits carbonés (14) circule à l'intérieur de cette zone d'entrée (13) tubulaire, dans le sens de la flèche. La paroi, qui entoure la colonne de produits, comporte une pièce annulaire en graphite (49) et deux pièces annulaires en un matériau réfractaire isolant (50 et 51). Une enveloppe extérieure en tôle d'acier (52) est refroidie au moyen d'une circulation de fluide non représentée. Cette enveloppe extérieure est reliée à la paroi métallique (53) du corps du four par l'intermédiaire d'un joint isolant non représenté. Un collier métallique (54) enserre l'enveloppe extérieure (52) dans la zone où celle-ci est elle-même en contact avec la pièce en graphite dans sa partie amont (55). Ce collier est relié par le conducteur (25) à l'un des pôles de la source de courant S (voir fig. 2). La transmission du courant électrique entre la pièce en graphite (49) et la colonne de produits carbonés (14) est assurée grâce à une matière carbonée divisée (56) qui remplit l'intervalle entre la colonne de produits carbonés (14) et la partie aval (57) de la pièce en graphite (49). Cette matière carbonée divisée peut être constituée par des grains de coke, de graphite ou d'une autre matière carbonée. Elle est introduite à l'extrémité amont de la zone d'entrée par la trémie (58).

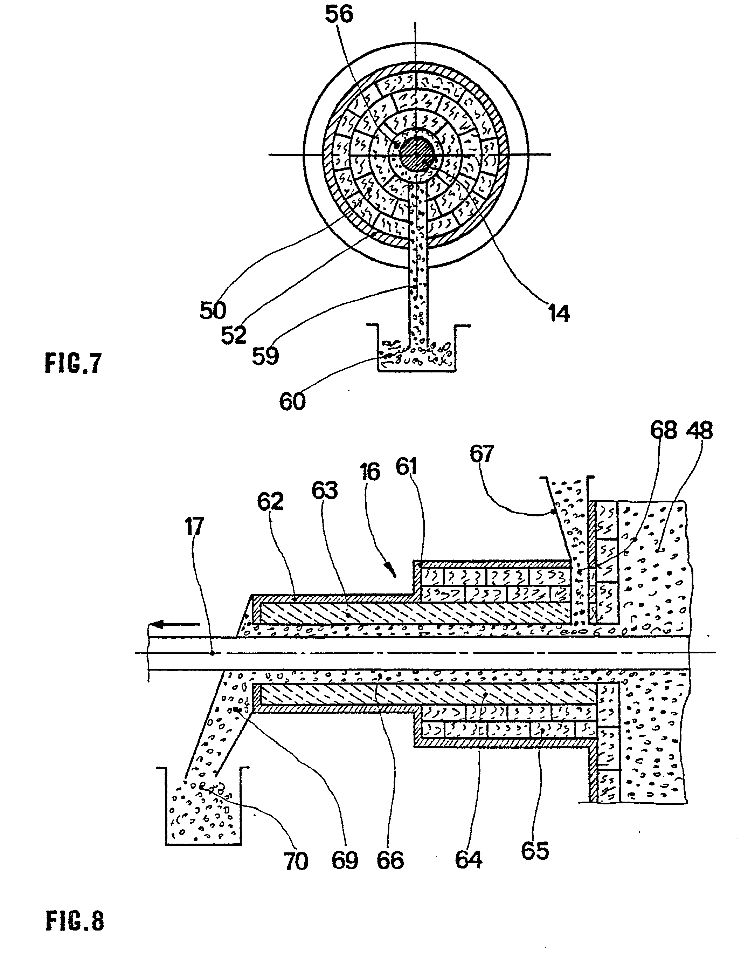

Le déplacement continu de la colonne d'électrodes tend à provoquer un entraînement de cette matière carbonée en direction du corps du four. Mais, le garnissage de matière carbonée divisée (30), qui remplit le corps du four, fait obstacle à cet entraînement. Pour éviter les coincements éventuels, cette matière peut s'écouler lentement à l'extérieur par le canal (59) ménagé de préférence dans la partie inférieure de la paroi de la zone d'entrée (13) et situé à l'extrémité aval de cette zone d'entrée, orifice qui communique avec un récipient récepteur (60) visible aux figures 6 et 7.

La figure 7 est une vue en coupe suivant D-D de la figure 6, qui permet de voir le canal d'écoulement (59) et la répartition de la matière carbonée divisée (56) dans l'espace annulaire entourant la colonne de produits (14). Grâce à la présence de cette matière carbonée divisée, la liaison électrique entre la pièce en graphite dans sa partie avale (57) et la colonne de produits, est assurée sur tout le pourtour de la colonne.

La configuration particulière de la pièce en graphite (49), qui est parcourue par le courant $I_2$, permet d'éviter de refroidir la zone corticale de la colonne de produits, qui a été préchauffée par le courant $I_1$ avant de pénétrer dans la zone d'entrée du four (voir figure 2) refroidie par circulation de fluide.

Pour éviter ce contact direct, on dispose entre la partie amont (55) de la pièce en graphite, qui est en contact avec la paroi froide extérieure (52), et la colonne de produits (14), un garnissage annulaire (51) en un réfractaire isolant. Par ailleurs, la pièce en graphite est suffisamment allongée pour que sa partie aval (57) qui assure le contact électrique avec la colonne de produits par l'intermédiaire de la matière carbonée divisée, puisse atteindre en régime normal de fonctionnement une température élevée par rapport à celle de l'enveloppe métallique (52) grâce au garnissage de réfractaire isolant (50) qui l'en sépare. Grâce à cette disposition, la partie aval (57) de la pièce en graphite atteint en régime normal une température de l'ordre de 500 à 1 000 °C, ce qui favorise une montée en température régulière de la colonne de produits.

De nombreux modes de réalisation de la pièce qui assure la liaison électrique avec la colonne de produits peuvent être envisagés donnant des résultats équivalents à celui décrit. D'une façon générale, il s'agit d'adopter une structure dans laquelle la partie de la pièce d'amenée de courant, qui est en contact avec la colonne de produits, soit de façon directe, soit de façon indirecte par l'intermédiaire d'une couche de matière de contact de quelques centimètres d'épaisseur, se trouve portée à une température comprise entre environ 500 et 1 000 °C. Dans le cas décrit aux figures 6 et 7, la surface de la pièce en graphite est en contact électrique avec la colonne de produits par l'intermédiaire d'une couche de carbone divisé d'environ 10 à 30 mm d'épaisseur.

La figure 8 est une coupe axiale agrandie de la zone de sortie (16) du four (12).

On voit que la colonne de produits graphitisés (17), qui sort du corps du four, circule dans une enceinte tubulaire qui comporte une enveloppe extérieure métallique en deux parties (61 et 62) refroidie de façon non décrite par un fluide tel que de l'eau. A l'intérieur de l'enveloppe, une paroi annulaire, de préférence en graphite (63) se trouve en regard de la colonne de produits graphitisés (17).

Afin de ne pas refroidir trop rapidement la colonne à la sortie du corps du four, cette paroi en graphite est séparée, dans sa partie amont (64), de l'enveloppe (61) au moyen d'un garnissage d'un réfractaire non carboné (65). Dans la partie aval, la paroi en graphite (63) est en contact direct avec l'enveloppe refroidie (62) de façon à permettre un refroidissement suffisant de la colonne de produits graphitisés avant que celle-ci ne débouche à l'extérieur. Afin d'éviter les entrées d'air dans le corps du four, et aussi l'oxydation de la colonne de produits qui en sort, une couche de matière carbonée divisée (66) remplit l'espace annulaire entre la colonne de produits et la paroi en graphite. Cette matière est introduite par la trémie (67) qui est mise en communication avec l'espace annulaire à l'extrémité amont de la zone de sortie (16) par un perçage (68) qui traverse les parois (64 et 65). Cette matière est entraînée lentement par le déplacement de la colonne de produits et s'écoule à l'extrémité aval de l'enceinte tubulaire par une goulotte (69) dans un récipient de réception (70). Des moyens de recirculation convenables peuvent reprendre le granulé dans ce récipient et le réintroduire dans la trémie (67). L'introduction de matière carbonée divisée au voisinage immédiat de l'extrémité aval du corps du four présente, en particulier, l'avantage d'empêcher les entraînements éventuels à l'extérieur de la matière carbonée divisée (48) contenue dans le corps du four. La matière carbonée divisée, qui circule dans la zone de sortie, peut être constituée par des grains de coke, de graphite ou de tout autre matière carbonée stable. Dans cette zone également, la vitesse de refroidissement de la colonne de produits graphitisés est ajustée suivant les mêmes vitesses que dans la zone R. Ainsi, dans le cas d'un diamètre de colonne d'environ 500 ± 50 mm, la vitesse de refroidissement ne dépasse pas environ 10 °C/min. jusqu'à 400 °C.

L'expérience a montré que, grâce à la contrainte mécanique qui est exercée sur la colonne de produits carbonés en défilement, cette colonne conserve son alignement, les tronçons de produits carbonés demeurant dans le prolongement les uns des autres. A intervalles réguliers, on effectue du côté aval l'extraction du dernier tronçon de la colonne de produits qui se trouve à l'état graphitisé. De même, on introduit en tête de colonne un nouveau tronçon de produit carboné à graphitiser. De préférence, ces produits carbonés à graphitiser sont constitués par un mélange de grains de carboné tels que du coke de pétrole ou une autre matière carbonée avec un liant convenable tel qu'un composé hydrocarboné et/ou une résine synthétique et/ou un autre liant. Ces produits ont subi, après mise en forme, une précuisson à une température de l'ordre de 600 à 1 200 °C. Cependant, la nature granulaire du calorifugeage utilisé dans le four permet le dégagement important de composés volatils sans perturber le fonctionnement. On peut donc traiter dans le four des produits carbonés qui contiennent encore quelques % de matières volatiles sans grand inconvénient.

Les deux exemples d'utilisation ci-après montrent, de façon précise, des conditions de graphitisation d'électrodes en produits carbonés au moyen du four suivant l'invention.

### Exemple 1

On traite un lot de produits carbonés préparés par filage, constitués d'un mélange de 75 % en masse de coke de pétrole et 25 % de brai de houille sous forme de barres cylindriques qui, après cuisson à 800 °C, ont un diamètre de 529 mm et une longueur unitaire de 2 150 mm. Dans cet état, ces barres ont une résistivité de 6 000 micro-ohms cm. Ces barres constituent une colonne de produits qu'on fait défiler dans un four suivant l'invention, tel que représenté aux figures 2 à 8. Au niveau des contacts entre les extrémités de chaque barre, on interpose une mince couche de feutre de carbone ou de graphite expansé comprimé pour améliorer le contact électrique et pour absorber les inégalités de surface. La colonne de produits carbonés est constituée au total de 11 barres ou tronçons. La pression exercée par les vérins sur la colonne de produits, au cours du défilement, est ajustée de façon que la contrainte de compression soit d'environ 0,6 à 1 MPa. La vitesse de défilement est d'environ 1,5 m/h. L'intensité du courant qui traverse le contact (20) est d'environ 10 000 à 15 000 A, tandis que l'intensité du courant qui traverse la colonne dans la zone de graphitisation G est de environ 40 000 A. La tension aux bornes de la source de courant alternatif est d'environ 100 V.

Dans la zone d'entrée (13), le diamètre intérieur de la pièce de contact en graphite dans sa partie aval (57) est d'environ 580 mm. La longueur de la zone de graphitisation G est d'environ 6 m ; elle est donc parcourue en environ 4 h. La zone de refroidissement R a une longueur d'environ 4 m et la zone de sortie (16) qui la prolonge, une longueur d'environ 6,5 m. En tenant compte de la longueur de la zone d'entrée (13) d'environ 1,5 m, on voit que le temps de passage dans le four du produit carboné constituant la colonne, est d'environ 12 h sans tenir compte des temps d'arrêt nécessaires pour décharger les tronçons graphitisés à l'extrémité aval et mettre en place les tronçons à graphitiser à l'extrémité amont. Le temps nécessaire pour produire un tronçon graphitisé de 2,150 m de long est d'environ 1,5 h en tenant compte des arrêts pour changement d'électrode. Ceci correspond à environ 500 kg de produit graphitisé à l'heure. La consommation d'énergie est de l'ordre de 3,5 KWh/kg.

Les caractéristiques physiques des produits ainsi graphitisés ont été comparés aux caractéristiques d'un lot identique qui a été graphitisé également par chauffage par effet Joule dans un four unifilaire statique par le procédé industriel classique (Héroult) décrit, par exemple, dans le brevet US. n° 1 029 121.

Les résultats sont les suivants :

| | Produits graphitisés suivant exemple 1 | Produits graphitisés en four unifilaire statique |
|---|---|---|
| Résistivité en micro – ohms cm | · 850 | 830 |
| Flexion longitudinale MPa (1) | 9,5 | 9,5 |
| Densité apparente T/m³ | 1,61 | 1,61 |

(1) essai suivant norme ASTM C 651-70 avec chargement en 4 points.

## Exemple 2

On a utilisé un four du même type que celui décrit aux figures 2 à 8, mais de dimensions sensiblement différentes, pour graphitiser des électrodes de 630 mm de diamètre et 2 430 mm de long. Le diamètre intérieur de la partie aval (57) de la pièce de contact en graphite dans la zone d'entrée (16) est porté à 680 mm. Les longueurs de la zone d'entrée, de la zone de graphitisation G, de la zone de refroidissement R et de la zone de sortie, sont les mêmes que dans l'exemple 1. La pression exercée sur la colonne en déplacement par les vérins (18) et (24) est réglée pour obtenir une contrainte axiale d'environ 0,6 à 1 MPa. L'intensité du courant, qui traverse la colonne de produits dans la zone de graphitisation est de 55 000 A, et la tension aux bornes de la source de courant alternatif est de 80 volts environ. L'intensité du courant introduit en tête de colonne à travers le contact (20) est d'environ 13 000 à 17 000 A, le complément à 55 000 étant introduit au niveau du contact (25). La vitesse de défilement de la colonne est de 1,0 m/h. On extrait donc du four une électrode graphitisée en environ 2,5 h, en tenant compte du temps d'arrêt nécessaire pour enlever le tronçon graphitisé et mettre en place un nouveau tronçon. La production horaire de ce four est donc d'environ 400 kg/h. Les caractéristiques physiques des produits ainsi graphitisés sont les mêmes que dans le cas de l'exemple 1.

De très nombreux autres modes de mise en œuvre du procédé suivant l'invention peuvent être envisagés. Le four utilisé peut lui aussi comporter de très nombreuses variantes qui ne sortent pas du domaine de l'invention. On peut, en particulier, adapter les conditions d'alimentation en courant électrique aux caractéristiques des produits. On peut adapter, de même, les conditions d'introduction dans le four et de sortie du four de la colonne de produits à la forme et aux dimensions de ces produits. On peut, en particulier graphitiser non seulement des barres pleines, mais aussi des barres creuses telles que des tubes de sections diverses. Toutes ces modifications ou adaptations ne sortent pas du domaine de l'invention.

## Revendications

1. Procédé continu de graphitisation de produits carbonés longs précuits, dans lequel on fait défiler ces produits carbonés en colonne, à l'intérieur d'un four, muni d'un garnissage constitué par une matière carbonée divisée (30) qui remplit l'intérieur, dudit four, le chauffage de la colonne de produits carbonés (14-17) étant assuré par effet Joule direct jusqu'à une température d'au moins 2 500 °C, caractérisé en ce que la colonne de produits carbonés (14-17) est disposée de façon horizontale ou proche de l'horizontale et en ce que la matière carbone divisée (30) est en contact avec ladite colonne de produits carbonés (14-17) mais ne l'accompagne pas dans ses déplacements.

2. Procédé suivant la revendication 1, caractérisé en ce que la colonne de produits carbonés subit pendant le défilement une contrainte de compression d'environ 0,1 à 1 MPa selon l'axe de défilement.

3. Procédé suivant les revendications 1 ou 2, caractérisé en ce que la liaison électrique entre la colonne de produits et au moins une source de courant du côté amont est répartie en au moins deux points, une fraction de 10 à 50 % de l'intensité du courant de graphitisation étant introduite en tête de colonne (20-24) et la fraction complémentaire plus en aval (13-25).

4. Procédé suivant l'une des revendications 1 à 3, caractérisé en ce qu'après avoir atteint une température d'au moins 2 500 °C, la colonne est refroidie jusqu'à une température inférieure ou égale à 400 °C à une vitesse moyenne ne dépassant pas 10 °C/min. dans le cas d'une colonne d'environ 500 ± 50 mm de diamètre.

5. Procédé suivant la revendication 4, caractérisé en ce que, dans le cas d'une colonne d'environ 600 ± 50 mm de diamètre, la vitesse de refroidissement ne dépasse pas 7 °C/min.

6. Four continu de graphitisation de produits longs carbonés comprenant une enceinte allongée qui constitue le corps du four (12) et qui comporte à l'une de ses extrémités une zone d'entrée (13) des produits à graphiter et, à l'autre extrémité, une zone de sortie (16), le calorifugeage du four étant constitué par une matière carbonée divisée (30) caractérisé en ce que ces zones sont disposées suivant un axe sensiblement horizontal le long duquel se déplacent en colonne (14-17) les produits à graphiter qui sont directement chauffés par effet Joule et en ce que la matière carbonée divisée (30) est en contact avec la colonne de produits (14-17) mais ne l'accompagne pas dans ses déplacements.

7. Four suivant la revendication 6, caractérisé en ce qu'il est équipé de vérins (18-21) ou de tout autre moyen permettant de déplacer la colonne à la vitesse de défilement voulue tout en exerçant sur elle une contrainte de compression.

8. Four suivant les revendications 6 ou 7, caractérisé en ce que les contacts entre les tronçons de produits carbonés qui constituent la colonne, sont améliorés au moyen d'une matière de contact telle qu'une couche mince d'un feutre de carbone ou de graphite expansé comprimé.

9. Four suivant l'une des revendications 6 à 8, caractérisé en ce qu'un contact électrique entre la colonne de produits carbonés et l'un des pôles de la source de courant est réalisé dans la zone d'entrée du four au moyen d'un manchon en graphite allongé (49) qui entoure la colonne, dont la zone d'extrémité amont (55) est reliée à la source de courant et isolée thermiquement et électriquement par rapport à la colonne de produits, tandis que l'extrémité aval (57) assure le contact avec la colonne de produits carbonés.

10. Four suivant l'une des revendications 6 à 9, caractérisé en ce qu'un deuxième contact électrique relié au même pôle de la source de courant que le manchon en graphite allongé, est réalisé au moyen d'une pièce de contact (20) placée à l'extrémité amont de la colonne de produits carbonés.

11. Four suivant l'une des revendications 6 à 10, caractérisé en ce qu'à l'intérieur du four, à l'extrémité de la zone de graphitisation, au moins dune pièce allongée en graphite (34-35), disposée transversalement, permet de réaliser une liaison électrique entre la colonne de produits carbonés (29) et le deuxième pôle de la source de courant (27).

12. Four suivant la revendication 11, caractérisé en ce qu'au moins une pièce allongée en graphite (34-35) comporte au moins une extrémité (38-39) reliée à l'extérieur du four à la source de courant et une partie située à l'intérieur du four, à proximité immédiate de la colonne de produits (29), qui est en contact électrique avec celle-ci de façon directe ou par l'intermédiaire de granulé de carbone divisé, tel que du granulé de graphite (40).

13. Four suivant l'une des revendications 6 à 12, caractérisé en ce qu'en aval de la zone de graphitisation, au moins un conducteur thermique de liaison (42-42) est disposé au sein de la matière carbonée divisée (48), de façon que son axe soit sensiblement transversal par rapport à l'axe de défilement, au moins l'une de ses extrémités éloignée de la colonne de produits carbonés étant refroidie par un moyen de refroidissement (46-47), une partie de ce conducteur thermique de liaison située à l'intérieur du four se trouvant à proximité immédiate de la colonne de produits carbonés (29).

14. Four suivant la revendication 13, caractérisé en ce que le ou les conducteur(s) thermique(s) (42-43) est (sont) en graphite.

15. Four suivant la revendication 13, caractérisé en ce que plusieurs conducteurs thermiques sont disposés le long de l'axe de défilement entre la zone de graphitisation et l'extrémité aval du four.

16. Four suivant l'une des revendications 6 à 12, caractérisé en ce que dans la zone d'entrée (13), la colonne de produits (14) est entourée d'une couche de matière carbonée divisée (56).

17. Four, selon la revendication 16, caractérisé en ce qu'il comporte un moyen (58) d'introduction de matière carbonée divisée (56) à l'extrémité amont de la zone d'entrée (13) et un moyen d'évacuation (59) de matière carbonée divisée à l'extrémité aval de la zone d'entrée (13).

18. Four suivant l'une des revendications 6 à 17, caractérisé en ce que, dans la zone de sortie (16), la colonne de produits (17) est entourée d'une couche de matière carbonée divisée (66).

9

19. Four suivant la revendication 18, caractérisé en ce qu'il possède un moyen d'introduction (67) de matière carbonée divisée à l'extrémité amont de la zone de sortie (16), et un moyen d'évacuation (69) de matière carbonée divisée à l'extrémité aval de la zone de sortie (16).

## Claims

1. A continuous process for the graphitisation of long prebaked carbonaceous products in which said carbonaceous products are moved along in the form of a column within a furnace provided with a lining formed by a divided carbonaceous material (30) which fills the interior of said furnace, heating of the column of carbonaceous products (14-17) being effected by a direct Joule effect up to a temperature of at least 2 500 °C characterised in that the column of carbonaceous products (14-17) is disposed horizontally or close to horizontally and that the divided carbon material (30) is in contact with said column of carbonaceous products (14-17) but does not accompany it in its movements.

2. A process according to claim 1 characterised in that the column of carbonaceous products, during the movement thereof, is subjected to a compression stress of about 0.1 to 1 MPa along the line of movement.

3. A process according to claim 1 or 2 characterised in that the electrical connection between the column of products and at least one current source on the upstream side is distributed at least two points, a fraction of from 10 to 50 % of the strength of the graphitisation current being introduced at the leading end of the column (20-24) and the complementary fraction being introduced at a more downstream location (13-25).

4. A process according to one of claims 1 to 3 characterised in that, after having attained a temperature of at least 2 500 °C, the column is cooled to a temperature which is lower than or equal to 400 °C at an average rate which does not exceed 10 °C per minute in the case of a column of a diameter of approximately 500 ± 50 mm.

5. A process according to claim 4 characterised in that, in the case of a column of a diameter of approximately 600 ± 50 mm, the rate of cooling does not exceed 7 °C per minute.

6. A continuous furnace for the graphitisation of long carbonaceous products comprising an elongate chamber which constitutes the body of the furnace (2) and which comprises at one of its ends an intake zone (13) for the products to be graphitised and at the other end an outlet zone (16), the heat insulation of the furnace being formed by a divided carbonaceous material (30) characterised in that said zones are disposed along a substantially horizontal line along which the products to be graphitised are displaced in a column (14-17), said products being directly heated by Joule effect, and that the divided carbonaceous material (30) is in contact with the column of products (14-17) but does not accompany it in its movements.

7. A furnace according to claim 6 characterised in that it is provided with jacks (18-21) or any other means for displacing the column at the desired rate of movement while applying a compression stress thereto.

8. A furnace according to claim 6 or claim 7 characterised in that the contacts between the portions of carbonaceous products which make up the column are improved by means of a contact material such as a thin layer of a compressed expanded graphite or carbon felt.

9. A furnace according to one of claims 6 to 8 characterised in that an electrical contact between the column of carbonaceous products and one of the poles of the current source is made in the intake zone of the furnace by means of an elongate graphite sleeve (49) which surrounds the column, the upstream end zone (55) of which is connected to the current source and insulated thermally and electrically with respect to the column of products, while the downstream end (57) provides contact with the column of carbonaceous products.

10. A furnace according to one of claims 6 to 9 characterised in that a second electrical contact which is connected to the same pole of the current source as the elongate graphite sleeve is produced by means of a contact portion (20) placed at the upstream end of the column of carbonaceous products.

11. A furnace according to one of claims 6 to 10 characterised in that within the furnace, at the end of the graphitisation zone, at least one elongate graphite portion (34-35) which is disposed transversely makes it possible to produce an electrical connection between the column of carbonaceous products (29) and the second pole of the current source (27).

12. A furnace according to claim 11 characterised in that at least one elongate graphite portion (34-35) comprises at least one end (38-39) connected on the outside of the furnace to the current source and a part disposed in the interior of the furnace, in the imediate vicinity of the column of products (29), which is in electrical contact therewith directly or by way of divided carbon granular material such as graphite granules (40).

13. A furnace according to one of claims 6 to 12 characterised in that, downstream of the graphitisation zone, at least one thermal connecting conductor (42-42) is disposed within the divided carbonaceous material (48) in such a way that its axis is substantially transverse with respect to the axis of movement, at least one of its ends which is remote from the column of carbonaceous products being cooled by a cooling means (46-47), a part of said thermal connecting conductor which is disposed in the interior of the furnace being disposed in the immediate vicinity of the column of carbonaceous products (29).

14. A furnace according to claim 13 characterised in that the thermal conductor or conductors (42-43) is or are of graphite.

15. A furnace according to claim 13 characterised in that a plurality of thermal conductors are disposed along the line of movement between the graphitisation zone and the downstream end of the furnace.

16. A furnace according to one of claims 6 to 12 characterised in that, in the intake zone (13), the column of products (14) is surrounded by a layer of divided carbonaceous material (56).

17. A furnace according to claim 16 characterised in that it comprises a means (58) for introducing divided carbonaceous material (56) at the upstream end of the intake zone (13) and a means (59) for removing divided carbonaceous material at the downstream end of the intake zone (13).

18. A furnace according to one of claims 6 to 17 characterised in that, in the outlet zone (16), the column of products (17) is surrounded by a layer of divided carbonaceous material (66).

19. A furnace according to claim 18 characterised in that it has a means (67) for introducing divided carbonaceous material at the upstream end of the outlet zone (16) and a means (69) for removing divided carbonaceous material at the downstream end of the outlet zone (16).

**Patentansprüche**

1. Kontinuierliches Verfahren zur Graphitisierung vorgebrannter langer kohlenstoffhaltiger Erzeugnisse, bei dem man diese kohlenstoffhaltigen Erzeugnisse säulenförmig im Inneren eines Ofens durchlaufen läßt, der mit einer Auskleidung versehen ist, die aus einem unterteilten kohlenstoffhaltigen Material (30) besteht und das Innere ausfüllt, wobei die Erhitzung der Säule von kohlenstoffhaltigen Erzeugnissen (14-17) durch direkte Joulesche Wärme bis zu einer Temperatur von wenigstens 2 500 °C gesichert wird, dadurch gekennzeichnet, daß die Säule der kohlenstoffhaltigen Erzeugnisse (14-17) in horizontaler oder nahezu horizontaler Weise angeordnet ist und daß das unterteilte kohlenstoffhaltige Material (30) im Kontakt mit dieser Säule der kohlenstoffhaltigen Erzeugnissen (14-17) ist, sie aber bei ihrem Durchlauf nicht begleitet.

2. Verfahren nach dem Anspruch 1, dadurch gekennzeichnet, daß die Säule der kohlenstoffhaltigen Erzeugnisse während des Durchlaufs einer Druckspannung von etwa 0,1 bis 1 MPa längs der Durchlaufachse ausgesetzt wird.

3. Verfahren nach den Ansprüchen 1 oder 2, dadurch gekennzeichnet, daß die elektrische Verbindung zwischen der Säule von Erzeugnissen und wenigstens einer Stromquelle an der Stromaufseite auf wenigstens 2 Punkte verteilt wird, wobei ein Anteil von 10-50 % der Stärke des Graphitisierungsstroms am Säulenkopf (20-24) und der restliche Anteil weiter stromab (13-25) eingeführt werden.

4. Verfahren nach einem der Ansprüche 1-3, dadurch gekennzeichnet, daß nach dem Erreichen einer Temperatur von wenigstens 2 500 °C die Säule bis zu einer Temperatur unter oder gleich 400 °C mit einer mittleren Geschwindigkeit abgekühlt wird, die im Fall einer Säule von etwa 500 ± 50 mm Durchmesser 10 °C/min nicht übersteigt.

5. Verfahren nach dem Anspruch 4, dadurch gekennzeichnet, daß im Fall einer Säule von etwa 600 ± 50 mm Durchmesser die Abkühlungsgeschwindigkeit 7 °C/min nicht übersteigt.

6. Durchlaufofen zur Graphitisierung langer kohlenstoffhaltiger Erzeugnisse mit einem länglichen Gehäuse, das den Körper des Ofens (12) bildet und das an einem seiner Enden eine Einlaßzone (13) der zu graphitisierenden Erzeugnisse und am anderen Ende eine Auslaßzone (16) aufweist, wobei die Wärmedämmung des Ofens aus einem unterteilten kohlenstoffhaltigen Material (30) besteht, dadurch gekennzeichnet, daß diese Zonen längs einer im wesentlichen horizontalen Achse angeordnet sind, längs deren als Säule (14-17) die zu graphitisierenden Erzeugnisse durchlaufen, die direkt durch Joulesche Wärme erhitzt werden, und daß das unterteilte kohlenstoffhaltige Material (30) im Kontakt mit der Säule der Erzeugnisse (14-17) ist, sie jedoch während deren Durchlaufs nicht begleitet.

7. Ofen nach dem Anspruch 6, dadurch gekennzeichnet, daß er mit Winden (18, 21) oder jedem anderen Mittel ausgerüstet ist, womit die Fortbewegung der Säule mit der gewünschten Durchlaufgeschwindigkeit bei gleichzeitiger Einwirkung einer Druckspannung auf sie ermöglicht wird.

8. Ofen nach den Ansprüchen 6 oder 7, dadurch gekennzeichnet, daß die Kontakte zwischen den Abschnitten der kohlenstoffhaltigen Erzeugnisse, die die Säule bilden, mittels eines Kontaktmaterials, wie z. B. einer dünnen Schicht eines Kohlenstofffilzes oder aus expandiertem komprimiertem Graphit, verbessert sind.

9. Ofen nach einem der Ansprüche 6-8, dadurch gekennzeichnet, daß ein elektrischer Kontakt zwischen der Säule der kohlenstoffhaltigen Erzeugnisse und einem der Pole der Stromquelle in der Einlaßzone des Ofens mittels einer länglichen Muffe (49) aus Graphit hergestellt ist, die die Säule umgibt, wobei deren Stromaufendzone (55) mit der Stromquelle verbunden und thermisch und elektrisch gegenüber der Säule der Erzeugnisse isoliert ist, während das Stromabende (57) den Kontakt mit der Säule der kohlenstoffhaltigen Erzeugnisse sichert.

10. Ofen nach einem der Ansprüche 6-9, dadurch gekennzeichnet, daß ein zweiter elektrischer Kontakt, der mit demselben Pol der Stromquelle wie die längliche Graphitmuffe verbunden ist, mittels eines Kontaktstücks (20) vorgesehen ist, das am Stromaufende der Säule der kohlenstoffhaltigen Erzeugnisse angeordnet ist.

11. Ofen nach einem der Ansprüche 6-10, dadurch gekennzeichnet, daß im Inneren des Ofens am Ende der Graphitisierungszone wenigstens ein quer angeordnetes, längliches Graphitstück (34, 35) die Schaffung einer elektrischen Verbindung zwischen der Säule der kohlenstoffhaltigen Erzeugnisse (29) und dem zweiten Pol der Stromquelle (27) ermöglicht.

12. Ofen nach dem Anspruch 11, dadurch gekennzeichnet, daß wenigstens ein längliches Stück aus Graphit (34, 35) wenigstens ein Ende (38, 39), das außerhalb des Ofens mit der Stromquelle verbunden ist, und einen im Inneren des Ofens in unmittelbarer Nähe der Säule der Erzeugnisse (29) liegenden Teil aufweist, der mit dieser direkt oder mittels unterteilten Kohlenstoffgranulats, wie Graphitgranulats (40), in elektrischem Kontakt ist.

13. Ofen nach einem der Ansprüche 6-12, dadurch gekennzeichnet, daß stromab der Graphitisierungszone wenigstens ein Wärmeverbindungsleiter (42, 43) innerhalb des unterteilten kohlenstoffhaltigen Materials (48) derart angeordnet ist, daß seine Achse im wesentlichen quer zur Durchlaufachse steht, wobei wenigstens sein eines, von der Säule der kohlenstoffhaltigen Erzeugnisse entferntes Ende durch ein Abkühlungsmittel (46, 47) gekühlt wird und ein im Inneren des Ofens liegender Teil dieses Wärmeverbindungsleiters sich in unmittelbarer Nähe der Säule der kohlenstoffhaltigen Erzeugnisse (29) befindet.

14. Ofen nach dem Anspruch 13, dadurch gekennzeichnet, daß der oder die Wärmeleiter (42, 43) aus Graphit ist (sind).

15. Ofen nach dem Anspruch 13, dadurch gekennzeichnet, daß mehrere Wärmeleiter längs der Durchlaufachse zwischen der Graphitisierungszone und dem Stromabende des Ofens angeordnet sind.

16. Ofen nach einem der Ansprüche 6-12, dadurch gekennzeichnet, daß die Säule der Erzeugnisse (14) in der Einlaßzone (13) von einer Schicht aus unterteiltem kohlenstoffhaltigen Material (56) umgeben ist.

17. Ofen nach dem Anspruch 16, dadurch gekennzeichnet, daß er ein Mittel (58) zum Einführen unterteilten kohlenstoffhaltigen Materials (56) am Stromaufende der Einlaßzone (13) und ein Mittel (59) zum Auslaß unterteilten kohlenstoffhaltigen Materials am Stromabende der Einlaßzone (13) aufweist.

18. Ofen nach einem der Ansprüche 6-17, dadurch gekennzeichnet, daß die Säule der Erzeugnisse (17) in der Auslaßzone (16) von einer Schicht unterteilten kohlenstoffhaltigen Materials (66) umgeben ist.

19. Ofen nach dem Anspruch 18, dadurch gekennzeichnet, daß er ein Mittel (67) zum Einführen unterteilten kohlenstoffhaltigen Materials am Stromaufende der Auslaßzone (16) und ein Mittel (69) zum Auslaß unterteilten kohlenstoffhaltigen Materials am Stromabende der Auslaßzone (16) besitzt.

**FIG.1**

**FIG.2**

**FIG.3**

33

29

32

31

30

**FIG.4**

41  40  27

38

26

34

39

35

36  29  37

FIG.5

FIG.6

FIG.7

FIG.8

4